# Europäisches Patentamt
## European Patent Office
## Office européen des brevets

(19)

(11) Publication number: **0 055 311**
**B1**

(12)

# EUROPEAN PATENT SPECIFICATION

(45) Date of publication of patent specification: **07.05.86**

(21) Application number: **80304754.7**

(22) Date of filing: **30.12.80**

(51) Int. Cl.⁴: **B 01 J 37/02, B 01 J 37/08, C 10 G 49/02, C 10 G 1/08, B 01 J 27/20**

(54) Catalysts and hydrocarbon treating processes utilizing the same.

(43) Date of publication of application:
**07.07.82 Bulletin 82/27**

(45) Publication of the grant of the patent:
**07.05.86 Bulletin 86/19**

(84) Designated Contracting States:
**DE FR GB NL**

(56) References cited:
**EP-A-0 028 667**
**AU-A-1 352 066**
**FR-A- 762 324**
**FR-A-2 356 714**
**FR-A-2 356 715**
**US-A-3 147 154**
**US-A-3 775 286**
**US-A-3 962 139**
**US-A-4 054 504**
**US-A-4 134 825**

**The file contains technical information submitted after the application was filed and not included in this specification**

(73) Proprietor: **Exxon Research and Engineering Company**
**P.O.Box 390 180 Park Avenue**
**Florham Park New Jersey 07932 (US)**

(72) Inventor: **Bearden, Roby, Jr.**
**505 Stanford Avenue**
**Baton Rouge Louisiana (US)**
Inventor: **Aldridge, Clyde Lee**
**6022 South Pollard Parkway**
**Baton Rouge Louisiana (US)**
Inventor: **Pine, LLoyd Albert**
**5858 Berkshire Drive**
**Baton Rouge Louisiana (US)**

(74) Representative: **Somers, Harold Arnold et al**
**ESSO Engineering (Europe) Ltd. Patents & Licences Apex Tower High Street**
**New Malden Surrey KT3 4DJ (GB)**

Courier Press, Leamington Spa, England.

## Description

This invention relates to a catalyst, a method of preparing the catalyst and its use in hydrocarbon treating and conversion processes.

Catalysts prepared in situ in a hydrocarbonaceous oil from an oil soluble metal compound and their use in hydroconversion processes are disclosed in U.S. Patent 4,134,825.

It is also known to convert simultaneously a mixture of a hydrocarbonaceous oil and coal in the presence of hydrogen and a catalyst. See, for example, U.S. Patent 4,054,504.

Alloy-skeleton metal sulfide hydrogenation catalysts that are corrosion resistant are known. See, U.S. Patent 2,402,626.

Other alloy catalysts are also known. See, for example, U.S. Patents 3,519,575; 3,052,739; 3,962,139; 3,147,154 and 3,455,845.

A highly dispersed alloy material of high surface area and their sulfides useful as hydrocracking catalysts are known. See, U.S. Patent 3,639,647.

Ferromagnetic catalyst supports are known. See Ind. Eng. Chem. Process, Vol. 15, No. 1, 1976, pp. 226—227.

French patent specification FR—A—2,356,715 (and the equivalent U.K. patent specification GB—A—1 584 785) discloses a process for preparing in situ a hydroconversion catalyst, starting from an oil-soluble thermally-decomposable compound of a metal selected from the metals of Groups VB, VIB, VIIB and VIII (other than iron) which is added to a hydrocarbon oil having a Conradson carbon content not exceeding 50 weight percent and the resulting mixture is then heated in the presence of hydrogen to produce the catalyst, which is recovered. In one embodiment, particles of elemental iron or iron oxide are added to the hydrocarbon oil. The resulting catalysts are highly dispersed and have particle sizes of approximately 2 microns (2 µm). The elemental iron or iron oxide is said to suppress coke formation and to enhance the removal of nickel and vanadium when the hydroconversion catalyst is employed in the hydroconversion of coke-depositing hydrocarbon chargestocks which contain nickel and vanadium.

In slurry hydroconversion processes, catalyst recovery from the hydroconverted products is difficult. The use of a high density metal or metal alloy as catalyst support would improve recovery of the catalyst due to the high density of the material and/or its magnetic properties.

Except for catalytic metals and metal compounds that were used unsupported, it was generally considered desirable to composite catalytic metal compounds with a high surface area support for use as catalysts. In contrast, the catalysts of the present invention comprise a catalytic metal-carbon-hydrogen composition deposited on a low surface area support which provides a means of catalyst dispersion and facilitates catalyst recovery. The metal-containing deposit or coating provides the high surface area or "extended" catalyst surface for the desired catalytic reactions.

In accordance with the invention, there is provided a process for the preparation of a supported catalyst composition comprising the steps of:

(a) adding to a hydrocarbon oil having a Conradson carbon content of up to 50 weight percent particles of a support of elemental iron;

(b) adding to the hydrocarbon oil an oil-soluble thermally-decomposable metal compound of which the metal constituent is selected from the metals of Groups V, VIB, VIIB and VIII (other than iron) of the Periodic Table of Elements or mixtures of said metals; and

(c) heating the chargestock in the presence of a reducing gas to decompose the thermally-decomposable metal compound, characterized by the following combination of features;

(d) the support is selected from solid particles of at least one metal or alloy of metals selected from Groups IB, II, III, IV, VB, VIB, VIIB and VIII;

(e) the particles constituting the support have a surface area of less than 5 $m^2/g$;

(f) the metal constituent of the thermally-decomposable metal compound is selected from the metals of Groups II, III, IV, V, VIB, VIIB and VIII of the Periodic Table;

(g) the said heating of the chargestock is effected in the presence of a gas containing hydrogen and/or hydrogen sulfide;

(h) the amount of thermally decomposable metal compound added to the hydrocarbon oil provides a ratio of atoms of Conradson carbon to atoms of metal constituent of no more than 600 to 1; and

(i) after the heating step, a supported catalyst composition comprising a catalyst composition deposited on the support is recovered, the catalyst composition comprising said metal constituent, carbon and hydrogen, said composition having a surface area of at least 50 $m^2/g$ and the support for the composition having a surface area of less than 5 $m^2/g$.

The invention also provides hydrocarbon treating and conversion processes employing catalysts as aforesaid or made by the process as aforesaid.

The catalyst of the present invention comprises a composition comprising catalytically active metal component, carbon and hydrogen deposited on finely divided support particles of a metal or a metal alloy.

Suitable supports are elemental metals and metal alloys which remain solid under process conditions and which have a low surface area and low pore volume, that is, a surface area of less than five square metre per gram, preferably less than one square metre per gram, more preferably less than 0.5 square meter per gram and a pore volume of less than about 0.1 cubic centimeter per gram.

# 0 055 311

The surface area referred to herein is in accordance with the method of Brunauer, Emmet and Teller (BET) *J. American Chem. Soc.*, Vol. 60 (1938), pp. 309—319.

The pore volume referred to herein is measured by nitrogen adsorption isotherm as described in *Analytical Chemistry*, Vol. 32, April, 1960; pp. 532—536. Suitable supports include metals and metal alloys of metals of Groups IB, II, III, IV, VB, VIB, VIIB, VIII and mixtures thereof of the Periodic Table of Elements.

The Periodic Table of Elements referred to herein is given in *Handbook of Chemistry and Physics* published by Chemical Rubber Publishing Co., Cleveland, Ohio, 45th Edition (1964).

Preferably, the support comprises at least one metal of the group consisting of iron, cobalt, nickel, chromium, molybdenum, tungsten, vanadium, zinc, tantalum, aluminum, copper and zirconium. More preferably, the support comprises iron. A preferred metal alloy comprises iron and at least one metal selected from the group consisting of chromium, molybdenum, tungsten and vanadium.

More preferably, the metals or alloys are chosen from those that are resistant to corrosion by oxygen or sulfur. Metals or metal alloys having paramagnetic properties and ferromagnetic properties are particularly preferred since the magnetic properties of the support facilitate recovery of the catalyst by magnetic separation processes. Ferromagnetic alloys are commercially available, for examples, grades 410 and 434 of stainless steel. The given grades of stainless steel are in accordance to the designation of American Iron and Steel Institute (see *Lange's Handbook of Chemistry*, Handbook Publisher, Inc., Sandusky, Ohio, 1952, p. 840).

Most preferred supports are aluminum alloy powders that are prepared by atomizing the molten (liquid) aluminum alloy into a stream which can be water, a gas, or mixtures thereof. For example, the gas may be hydrogen, argon, helium, nitrogen, steam, air, carbon dioxide, etc. The molten alloy first may be atomized into an inert gas followed by steam treating or air-steam treatment. The formation of metal or metal alloy powders by atomization is well known in the art. See, for example, the book of W. D. Jones, *Fundamental Principles of Powder Metallurgy*, London: Edward Arnold Publishers, 1960, pages 213—238. The alloy powder suitable as support of the catalyst of the present invention, when taken alone prior to being composited with the deposit or coating comprises particles ranging in size from 0.5 to 150 µm in diameter. The atomized aluminum alloy powder comprises at least one additional metal component other than aluminum selected from the group consisting of metal components of Groups IB, II, III, IV, VB, VIB, VIIB, VIII and mixtures thereof of the Periodic Table of Elements.

Preferably, the additional metal component of the aluminum alloy powder is selected from the group consisting of iron, cobalt, nickel, chromium, molybdenum, tungsten, vanadium, zinc, tantalum, copper, and zirconium. More preferably the additional metal component comprises iron. Most preferably, the alloy powder is a ferroaluminum alloy powder.

The aluminum is suitably present in the aluminum alloy powder in an amount ranging from 1 to 59 weight percent, preferably from 2.0 to 33 weight percent, more preferably from 8 to 20 weight percent. Bound oxygen may be present in the aluminum alloy in an amount ranging from 0.001 to 2.0 weight percent, preferably, from 0.01 to 1.5 weight percent, most preferably from 0.1 to 1.0 weight percent. A preferred alloy comprises from 10 to 15 weight percent aluminum; from 84 to 89.9 weight percent iron and from 0.1 to 1.0 weight percent oxygen.

The atomized aluminum alloy powders used as support in the present invention, which have either paramagnetic or ferromagnetic properties, which facilitate recovery of the catalyst by magnetic separation processes, are preferred.

The atomized aluminum alloy powder supports of the present invention are highly resistant to corrosion by hydrogen sulfide even under very severe conditions.

Suitable metal components of the composition that is deposited on the support are catalytically active components of metals of Groups II, III, IV, V, VIB, VIIB, VIII and mixtures thereof. Preferably the metal component is a component of vanadium, tungsten, molybdenum, nickel, cobalt, iron and mixtures thereof.

Suitable concentration of the metal component on the support includes from 0.01 to 10.0 weight percent, preferably from 0.1 to 5 weight percent, most preferably from 0.5 to 2.0 weight percent, calculated as the elemental metal, based on the total catalyst.

The high surface area supported catalysts of the present invention are made by utilizing a hydrocarbonaceous oil boiling at atmospheric pressure above about 221°C., preferably above about 260°C., more preferably above about 343°C. These hydrocarbon oils may be derived from any sources such as petroleum, oil shale, tar sands and oils derived from coal liquefaction processes. The Conradson carbon residue of these oils will generally range up to about 50 weight percent, preferably below about 30 weight percent (as to Conradson carbon residue, see ASTM test D-189-65).

By way of example, suitable hydrocarbon oils for the process of the present invention include virgin gas oil, vacuum gas oil, coker gas oil, visbreaker gas oil, petroleum distillates, white oils, hydrocarbon oils derived from coal liquefaction processes, coal liquefaction bottoms, synthetic polymer oils such as ethylene oligomers, synthetic and natural waxes, etc. Preferably, the oil is a mixture of hydrocarbons boiling at atmospheric pressure, in the range of 343 to 565°C. More preferably, the hydrocarbon chargestock comprises at least 50 percent of the Conradson carbon in the form of a hydrocarbon stream comprising more than .1 weight percent Conradson carbon residue, such as residua, whole crudes, etc.

To the hydrocarbon oil are added the support of the present invention and a thermally decomposable metal compound, wherein the metal constituent is selected from the group consisting of Groups II, III, IV, V,

3

# 0 055 311

VIB, VIIB, VIII and mixtures thereof of the Periodic Table of Elements. A sufficient amount of a single thermally decomposable metal compound or of a mixture of metal compounds is added to the oil to provide a ratio of atoms of Conradson carbon of the oil chargestock to atom of metal constituent of the thermally decomposable compound or compounds of no more than 600 to 1, more preferably less than 100 to 1. Suitable ranges of ratio of atoms of Conradson carbon of the oil to atom of metal constituent of the thermally decomposable metal compound include an atomic ratio ranging from 2 to 1 to 600 to 1, preferably from 2 to 1 to 300 to 1, more preferably from 4 to 1 to 100 to 1. Thus the amount of thermally decomposable metal compound added will vary depending on the Conradson carbon of the oil feed actually used so as to provide the ratio required to obtain high surface area catalytic solids.

By the expression "ratio of atoms of Conradson carbon of the oil chargestock to atoms of metal constituent" is intended herein the following relation:

$$\frac{\dfrac{\text{weight of Conradson carbon residue}}{12}}{\dfrac{\text{weight of the metal constituent of the thermally decomposable compound}}{\text{atomic weight of the metal}}}$$

Suitable thermally decomposable metal compounds convertible (under preparation conditions) to solid, high surface area deposit include (1) inorganic metal compounds such as carbonyls, halides, oxyhalides, polyacids such as isopolyacids and heteropolyacids (e.g., phosphomolybdic acid, and molybdosilicic acid); (2) metal salts of organic acids such as acyclic and alicyclic aliphatic carboxylic acids and thiocarboxylic acids containing two or more carbon atoms (e.g., naphthenic acids); aromatic carboxylic acids (toluic acid); sulfonic acids (e.g., toluenesulfonic acid); sulfinic acid; mercaptans; xanthic acids; phenols, di- and polyhydroxy aromatic compounds; (3) organo-metallic compounds such as metal chelates, e.g., with 1,3-diketones, ethylenediamine, ethylenediaminetetraacetic acid, phthalocyanines, etc.; (4) metal salts of organic amines such as aliphatic amines, aromatic amines and quaternary ammonium compounds.

The metal constituent of the thermally decomposable metal compound that is convertible to a solid, high surface area deposit is selected from the group consisting of Groups II, III, IV, V, VIB, VIIB, VIII and mixtures thereof of the Periodic Table of Elements, that is zinc, antimony, bismuth, titanium, cerium, vanadium, niobium, tantalum, chromium, molybdenum, tungsten, manganese, rhenium, iron, cobalt, nickel and the noble metals including platinum, iridium, palladium, osmium, ruthenium and rhodium. The preferred metal constituent of the thermally decomposable compound is selected from the group consisting of molybdenum, tungsten, vanadium, chromium, cobalt, titanium iron nickel and mixtures thereof. Preferred compounds of the given metals include the salts of acyclic (straight or branched chain) aliphatic carboxylic acids, salts of alicyclic aliphatic carboxylic acids, heteropolyacids, carbonyls, phenolates and organoamine salts.

When the thermally decomposable metal compound is added to the hydrocarbonaceous oil, it first dissolves or disperses in the oil and subsequently, under catalyst preparation conditions herein described, is converted to a solid high surface area catalyst.

The oil comprising the thermally decomposable metal compound is heated at a temperature ranging from 199°C to 571°C, preferably at a temperature ranging from 260°C to 482°C, more preferably at a temperature ranging from 316°C to 449°C, at a pressure of either atmospheric or superatmospheric, preferably at superatmospheric pressure in the presence of a gas selected from the group consisting of a hydrogen-containing gas, a hydrogen sulfide-containing gas, and a gas comprising hydrogen and hydrogen sulfide, preferably at least 50 psig (344.8 kPa gauge) of such gas. More preferably, the gas comprises hydrogen and hydrogen sulfide. The hydrogen sulfide may comprise from 1 to 90 mole percent, more preferably from 2 to 50 mole percent of the hydrogen-containing gas. Suitable total pressures in the catalyst preparation zone when the heating step is being conducted include a gauge pressure ranging up about 5000 psig (34475 kPa), preferably a gauge pressure ranging from 100 to 3000 psig (689.5 to 20685 kPa). Suitable reaction times include from 5 minutes to 4 hours, preferably from 10 minutes to 2 hours. Contact of the solution under catalyst preparation conditions in the reaction zone with the hydrogen sulfide-containing gas converts the metal compound to the corresponding metal catalyst. The oil containing the solids is removed from the catalyst preparation zone. The solids may be separated from the oil by conventional means, for example, by settling or centrifuging or filtration of the slurry. The recovered solids are the high surface area supported catalysts of the present invention. The surface area of coating or deposit on these catalysts will be at least 50 m²/g and range from 60 to 600 m²/g, usually from 100 to 500 m²/g. The total measured surface area of the supported catalyst (that is, deposit+support) will be at least 0.5 m²/g, and range from 0.5 to 60 m²/g, usually from 1.0 to 30 m²/g. Generally, the high surface area supported catalysts of the present invention comprise at least 0.01 to 10 weight percent, preferably above 0.1 to 5 weight percent, more preferably from 0.5 to 2 weight percent of the metal constituent, calculated as

4

elemental metal, corresponding to the metal constituent of the added thermally decomposable metal compound, said weight being based on the total high surface area catalyst. The catalyst of the present invention may be prepared either in a batch process or in a continuous type operation.

Alternatively, the high surface area composition comprising the metal-carbon-hydrogen may be preformed by utilizing the above-given thermally decomposable compounds, hydrocarbonaceous feed and preparation conditions except the omission of the low surface area support. The low surface area support is subsequently added to hydrocarbonaceous oil comprising the preformed high surface area composition or the preformed metal-carbon-hydrogen-containing composition is subsequently mixed with a hydrocarbonaceous oil of the same type as the oil suitable for the formation of the high surface area composition and with the low surface area support of the present invention. The mixture is heated at the same temperature and conditions used in the formation of the metal-carbon-hydrogen composition in the presence of a hydrogen-containing gas which may additionally comprise hydrogen sulfide for a time sufficient to deposit the metal-carbon-hydrogen composition on the low surface area support and thereby form a high surface area supported catalyst of the present invention.

The solids that are recovered from the reaction product of the catalyst preparation zone are suitable as catalysts, catalyst components or catalyst supports for use in a number of chemical processes and hydrocarbon treating and conversion processes such as catalytic cracking, hydrogenation, hydrogen refining, hydrodesulfurization, hydrocracking, reforming, etc., especially for hydroprocesses. The term "hydroprocess" is intended herein to mean a process conducted in the presence of hydrogen in which the hydrocarbonaceous oil feed is either upgraded (refined) without substantial change in the boiling range of the oil or a process in which the hydrocarbonaceous oil is converted to lower boiling hydrocarbon products.

The metal-carbon-hydrogen-coated support may be produced ex situ and added as a preformed metal component-carbon-hydrogen-coated support to the chargestock to be treated or the desired metal compound may be added to the hydrocarbonaceous oil chargestock containing the support and the decomposition of the metal compound may be made to occur in situ in the oil chargestock by heating the oil comprising the support and the metal compound to an elevated temperature while adding a hydrogen-containing gas or a hydrogen and hydrogen sulfide-containing gas to the mixture.

The catalyst of the present invention may be used in a slurry process, in a fluidized bed process, in a fixed bed process, in a moving bed process, in an ebullating bed process, etc.

It is particularly suited for use in slurry processes since recovery of the catalyst could be performed by gravity separation, magnetic filtration or a combination of both of these methods.

The particle size of the catalyst may suitably range from about 0.5 μm to about 150 μm in diameter, preferably from about 1 to about 50 μm, most preferably from about 1 to about 10 μm in diameter. The smaller particle sizes will be preferred for slurry type processes whereas particle sizes above 100 μm in diameter would be suitable for fluidized bed type processes.

The catalysts of the present invention are suitable for use in hydrocarbon treating processes and coal liquefaction processes. The catalysts are particularly suited for hydroconversion of hydrocarbonaceous oils and coal.

The operating conditions to be employed in the hydrocarbon treating processes are well known and will vary with the particular reaction desired. The following table summarizes typical reaction conditions in which the catalysts of the present invention can be utilized.

| Principal reaction desired | Temperature, °C. | Gauge pressure, (psig) kPa |
|---|---|---|
| Hydrorefining | 260—427 | (50—2000) 344.8—13790 |
| Hydrodesulfurization | 316—455 | (600—3500) 4137—24132 |
| Hydrocracking | 232—510 | (200—2000) 1379—13790 |
| Catalytic Cracking | 371—705 | (0—50) 0—344.8 |
| Catalytic Reforming | 454—538 | (50—1000) 344.8—6895 |
| Coal Liquefaction | 200—538 | (100—5000) 689.5—34480 |

The feedstocks suitable for the treating process in accordance with the invention include any of the well known feeds conventionally employed in the desired treating processes. Suitable feedstocks include hydrocarbonaceous oils derived from any source such as petroleum, shale, tar sand, coal liquefaction products, including coal liquefaction bottoms; coal and mixtures thereof. Typically, such feeds include naphthas, gas oils, atmospheric residua, vacuum residua, whole petroleum crude oils, including heavy crude oils, bitumen, etc.

The metal constituent or metal constituents of the coating or deposit of the present invention can be varied by using one or more initial thermally decomposable metal compounds which are subsequently

5

thermally decomposed. Alternatively, a preformed coating or the total catalyst may be composited with other known catalytic components. Thus, a recovered high surface area composition or the total catalyst may be composited in a conventional manner with metal constituents that are known to catalyze a given process. The compositing of the catalyst with the additional catalytic components may be performed by impregnating the preformed high surface area composition or total catalyst comprising one or more metal constituents with catalytic components or precursors in any conventional way, such as contact of the solids with a dissolved salt of the desired metal or metals or by a method such as disclosed in U.S. Patent 3,959,179.

The compositing of the preformed high surface area composition or total catalyst may be performed by depositing a desired catalytic metal component or precursor of a catalytic metal component on the surface of the solids, including contacting of the solids with vapor phase materials. Furthermore, physical mixtures of two or more different preformed high surface area compositions or total catalysts may be used in certain processes, for example, a recovered catalyst having one or more metal constituents which is different from another recovered catalyst wherein different initial thermally decomposable metal compounds were used.

The catalyst of the present invention may be used in a moving bed, fixed bed, fluidized bed, ebullating bed, suspension (transferline) or in slurry processes.

Preferred embodiments

The following examples are presented to illustrate the invention.

Example 1

Preparation of catalyst comprising molybdenum-carbon-hydrogen composition coated on 410 stainless steel powder (runs 476, 477).

A mixture consisting of 8.0 g of molybdenum naphthenate (6.0 weight percent molybdenum), 92 g of light Arab vacuum gas oil and 12.50 g of −325 mesh (0.043 mm) 410 stainless steel was charged to a 300 cc autoclave, which was pressured with 2000 psig (13790 kPa gauge) hydrogen at room temperature, heated to 316°C and held for one hour with stirring. The autoclave was cooled below 93.33°C and vented while further cooling to room temperature. The autoclave was then pressured with 100 psig (689.5 kPa gauge) of $H_2S$ and then to 210 psig (14480 kPa gauge) with hydrogen, after which it was heated at 399°C for two hours. After cooling, the autoclave was vented and the contents filtered. The solids were thoroughly washed with hot toluene followed by hot heptane and then dried in a vacuum oven at 90°C for one hour.

The recovered solids, which are supported catalysts in accordance with the present invention, weighed 13.93 g and had the following properties: pore volume, 0.13 cm$^3$/g; total surface area, 21.5 m$^2$/g; carbon, 0.95 weight percent; hydrogen, 0.15 weight percent.

The weight percent of coating with molybdenum calculated as $MoS_2$ based on the total catalyst was 6.85 weight percent.

The surface area of the stainless steel powder was determined to be 0.09 m$^2$/g and the pore volume, 0.01 cm$^3$/g. From this determination and the analyses of the supported catalyst, it was calculated that the surface area of the coating was 254 m$^2$/g and the pore volume was 1.31 cm$^3$/g.

Example 2

Preparation of catalyst comprising molybdenum-carbon-hydrogen composition coated on 410 stainless steel (Run 470).

A preparation similar to that described in Example 1 was performed except that 50.0 g of 410 stainless steel powder was added. The recovered solids, which were supported catalysts in accordance with the present invention, weighed 53.28 g and had the following properties: pore volume, 0.02 cm$^3$/g; total surface area, 2.63 m$^2$/g; carbon, 0.35 weight percent; hydrogen, 0.06 weight percent.

Electron photomicrographs showed that the catalyst comprised the high surface area molybdenum-carbon-hydrogen composition of Example 3 (see below) coated on the stainless steel support. The weight percent Mo—C—H coating, with Mo calculated as $MoS_2$, was 1.92 weight percent based on the weight of 410 stainless steel charged.

From the analyses, it was calculated that the coating had a surface area of 133 m$^2$/g and a pore volume of 0.52 cm$^3$/g.

Example 3

Preparation of unsupported high surface area molybdenum-hydrogen-carbon composition (Runs 471, 472).

This is not an example of a catalyst of the invention.

A preparation similar to the one described in Example 1 was performed except that the 410 stainless steel powder was not added. The weight of the recovered solids was 0.96 g.

This preparation was repeated, and the two solids were combined for analyses and testing. The solids, which are not in accordance with the supported catalyst of the present invention, had the following properties: pore volume, 2.17 cm$^3$/g; surface area, 272 m$^2$/g; carbon, 10.07 weight percent; hydrogen, 1.24 weight percent; molybdenum, 50 weight percent.

Electron photomicrographs showed that the unsupported catalyst comprises rough, irregular particles of 10 to 250 μm in size.

Example 4

Preparation of catalyst comprising molybdenum-carbon-hydrogen coated on 410 stainless steel powder starting with dispersion of 410 stainless steel and alcoholic phosphomolybdic acid in gas oil (Run 56-R-41).

A solution of 1.02 g of phosphomolybdic acid ($2H_3PO_4 . 20MoO_3 . 48H_2O$) in 4.48 g of anhydrous isopropyl alcohol and 92.78 g of light Arab vacuum gas oil was charged to a 300 cc autoclave along with 50.02 g of −325 mesh (Tyler) (−0.043 mm) 410 stainless steel powder. A gas charge comprising 100 psig $H_2S$ (689.5 kPa gauge) and 1900 psig (13100 kPa gauge) hydrogen was added at room temperature, and the autoclave was then heated to 399°C and held at this temperature with stirring for a period of two hours. Upon cooling below 93.33°C, the autoclave was vented and the gases were measured and collected for compositional analysis by mass spectrometry. The contents of the autoclave were filtered to recover the molybdenum-carbon-hydrogen coated alloy catalyst, which was washed with hot toluene followed by hot n-heptane to remove adhering oil, and then vacuum oven dried for 30 minutes at 90°C. The supported catalytic solids that were recovered weighed 51.10 grams and are catalysts in accordance with the present invention. The filtered gas oil product was analyzed for sulfur content so that a first cycle hydrodesulfurization activity of the catalyst could be evaluated. Product sulfur measured 0.764 weight percent compared to 2.4 weight percent sulfur for the gas oil feed.

Example 5

Preparation of catalysts comprising molybdenum coated on 410 stainless steel starting with phosphomolybdic acid impregnated 410 stainless steel dispersed in gas oil (Run 56-R-75).

This is not an example of a catalyst in accordance with the present invention.

A solution of 1.0 g of phosphomolybdic acid (PMA) in 9.0 g of anhydrous isopropyl alcohol was added dropwise with stirring to 50 g of stainless steel powder. The 10 g of solution was just sufficient to wet the powder. The mixture was then vacuum oven dried at 90°C for one hour to produce 50.66 g of dry, phosphomolybdic acid coated 410 stainless steel powder.

The dry powder and 96.19 g of light Arab vacuum gas oil were charged to a 300 cm³ autoclave, which was pressured to 100 psig (689.5 kPa gauge) with $H_2S$ and then up to 2000 psig (13790 kPa gauge) with hydrogen. After a stirred, two-hour contact at 399°C, the autoclave was cooled, vented and the contents filtered to recover the molybdenum coated catalyst. Washed free of adhering oil and vacuum oven dried, the catalyst was found to weigh 52.10 g. It is not a catalyst of the present invention.

The filtered product oil was found to contain 1.53 weight percent sulfur. This is considerably higher than that obtained for the product oil in Example 4.

Therefore, it can be seen that impregnating the molybdenum component on the metal alloy support prior to decomposition in gas oil gave an inferior catalyst relative to that obtained by dispersing the metal component (catalyst precursor) in gas oil and then conducting the decomposition in the presence of the alloy support (as described in Example 4).

Example 6

Preparation of unsupported high surface area molybdenum-carbon-hydrogen composition (Run 56-R-47).

A 300 cm³ autoclave containing a mixture of 8.10 g of molybdenum naphthenate and 92.5 g of vacuum gas oil was charged with 100 psig (689.5 kPa gauge) $H_2S$ and 1900 psig (13100 kPa gauge) hydrogen at room temperature. The autoclave was heated to 399°C and held for two hours with stirring. Upon cooling below 93.33°C, the autoclave pressure was released and the contents were filtered to recover a molybdenum-carbon-hydrogen solid composition. After washing with hot toluene followed by hot n-heptane, the solids were vacuum dried at 90°C for 30 minutes. There were recovered 1.0 g of molybdenum-carbon-hydrogen composition identical in appearance to that obtained in Example 3 (which was obtained by a slightly different procedure).

Example 7

Gas oil desulfurization with unsupported catalyst of Example 6 (Run 46-R-48).

Example 7 is not an example of the catalyst of the invention.

The high surface area molybdenum-carbon-hydrogen composition from Example 6 was charged to a 300 cc autoclave along with 92.27 g of fresh, light Arab vacuum gas oil. A gas charge comprising 100 psig (689.5 kPa gauge) $H_2S$ and 1950 psig (13445 kPa gauge) $H_2$ was added at room temperature, and the autoclave was then heated to 385°C for a 30-minute stirred contact followed by 40 minutes at 449°C. Upon cooling below 93.33°C, the autoclave gases were vented off, measured, and collected for analysis of composition by mass spectrometry. The autoclave contents were filtered to recover an unsupported catalyst comprising molybdenum, carbon and hydrogen and a product oil. The product oil was found to contain 0.38 weight percent sulfur. Overall, the desulfurization of the oil feed amounted to 84 weight percent.

7

Example 8

Preparation of supported molybdenum-carbon-hydrogen-containing composition from a mixture of preformed molybdenum-carbon-hydrogen composition and 410 stainless steel powder (Run 56-R-49).

A mixture consisting of 0.8 g of unsupported high surface area molybdenum-carbon-hydrogen composition recovered from Example 7, 50.0 g of −325 mesh (Tyler) (−0.043 mm) 410 stainless steel powder and 93.57 g of light Arab vacuum gas oil was charged to a 300 cc autoclave. A gas charge comprising 100 psig (689.5 kPa gauge) $H_2S$ and 1950 psig (13445 kPa gauge) $H_2$ was added at room temperature and the autoclave was then heated to 385°C for a 30-minute stirred contact followed by a contact of 40 minutes at 449°C. Upon cooling below 93.33°C, the autoclave gases were vented off, measured, and collected for analysis of composition by mass spectrometry. The contents of the autoclave were filtered to recover the molybdenum-containing catalyst and a product oil. After washing sequentially with hot toluene and hot n-heptane, the solids were vacuum dried at 90°C for 30 minutes. There were recovered 53.82 g of catalyst solids which were (1) identical in appearance to the molybdenum-carbon-hydrogen coated catalysts of Examples 1, 2 and 4; (2) free of any of the characteristically fluffy unsupported molybdenum-carbon-hydrogen composition; and (3) ferromagnetic, i.e., all of the solids were attracted by a magnet. The sulfur in the oil product, 0.34 weight percent, was somewhat lower than that seen in Example 7. This shows that the hydrodesulfurization activity of the catalyst was not lost by preparing it by combining the molybdenum-carbon-hydrogen composition with the 410 stainless steel powder. The supported catalyst resulting from Example 8 is a catalyst in accordance with the present invention.

Example 9

Gas Oil Desulfurization with the supported catalyst of Example 8 (Run 56-R-52).

The gas oil desulfurization test used in Example 7 was repeated using the catalyst of the present invention recovered from Example 8. The sulfur in the oil product was 0.38 weight percent, which is identical to that obtained with the unsupported catalyst comprising molybdenum-carbon-hydrogen of Example 7. The results show that the molybdenum-carbon-hydrogen composition continues to exhibit its full activity after being supported on 410 stainless steel powder.

Tables I to III summarize some of the data of the above-given examples.

TABLE I

| Sample Source | 410-SS[1] | Mo on 410-SS[1] Example 1 | Mo on 410-SS[1] Example 2 | Unsupported Mo-catalyst Example 3 |
|---|---|---|---|---|
| Composition, wt.% 410-SS[1] | 100 | 89.73 | 93.84 | — |
| Mo as $MoS_2$ | | 5.75 | 1.51 | 80 |
| Balance (S,C,H) | | 4.53 | 4.66 | 20 |
| Inspections S.A. m²/g | 0.09 | 21.5 | 2.63 | 272 |
| P.V. cm³/g | 0.01 | 0.13 | 0.02 | 2.17 |
| Properties of Mo-C-H coating[2] S.A. m²/g | — | 254 | 133 | 272 |
| P.V. cm³/g | — | 1.31 | .52 | 2.17 |

[1] 410-SS means 410 Stainless Steel
[2] Calculated Properties for Examples 1 and 2

TABLE II

Catalysts: Mo-C-H Coated on 410-Stainless Steel
Effect of Preparation Technique on
Hydrodesulfurization Activity

| Example No. | 4 | 5 |
|---|---|---|
| Type Precursor | PMA* dry coated on alloy | Mixture of alloy and alcohol solution of PMA* |
| Desulfurization of oil, % | 36 | 87 |

*PMA is Phosphomolybdic Acid

TABLE III

Comparison of high surface area molybdenum-carbon-hydrogen composition before and after supporting on 410-SS[1] (Vacuum gas oil hydrodesulfurization)

| Example No. | 7 | 9 |
|---|---|---|
| Type Preparation | Unsupported Molybdenum-C-H Composition | 410-SS[1] powder coated with Molybdenum-C-H Composition of Example 7 |
| Vacuum Gas Oil desulfurization, % | 84 | 84 |

[1] 410-SS is 410 Stainless Steel

Example 10

A catalyst comprising a composition of molybdenum sulfide-carbon-hydrogen deposited on stainless steel was prepared by charging a 300 cc Hastelloy-C autoclave with 91.1 grams of light Arabian vacuum gas oil, 3.4 grams of oil soluble molybdenum naphthenate (6% molybdenum) and 50 grams of finely divided stainless steel of the grade 410 series. Hastelloy-C is a trademark of Haynes Stellite Co., Kohomo, Ind. (see *Chemical Engineering Handbook*, McGraw Hill, 1934 edited by Perry). The stainless steel was ferromagnetic. Particle size distribution of the 410 stainless steel was 99.9% less than 30 μm, 96.7% less than 20 μm and 54.2% less than 10 μm. The reactor was flushed with hydrogen after charging and then pressured to 25 psig (172.4 kPa gauge) with hydrogen sulfide and then to 2000 psig (13790 kPa gauge) with hydrogen. The reactor temperature was increased to 300°C with stirring and held there for 120 minutes. Thereafter, the reactor was cooled quickly and the contents discharged. The stainless steel on which the metal sulfide-containing composition was deposited was recovered by filtration, washed free of adhering oil with toluene and vacuum dried at 80°C to constant weight. In this manner, 51.94 grams of catalyst which was still strongly ferromagnetic were recovered. This recovered catalyst gave the following analyses: molybdenum, 0.39 weight percent; carbon, 0.41 weight percent; hydrogen, 0.07 weight percent.

Analysis of the oil medium showed a molybdenum concentration of <1 ppm, thus further demonstrating that the molybdenum was associated with the 410 stainless steel particles.

The conversion advantages obtained using the $MoS_2$-carbon-hydrogen deposited on 410 stainless steel as catalyst in the hydrocracking of Cold Lake Crude, relative to 410 stainless steel alone and to a non-catalytic system are shown in Table IV.

### TABLE IV
#### Hydrocracking of cold lake crude
Conditions:
2000+psig (13790 kPa gauge) $H_2$
30 min @ 385°C
60 min @ 438—443°C
Catalyst conc. on feed 40 wt.%

| Run No. | 6R-34 | 21-R-05* | 21-R-08 |
|---|---|---|---|
| Catalyst | None | Catalyst of Example 10 | 410 SS |
| $C_1$—$C_4$, wt.% | 6.5 | 2.5 | — |
| Coke, wt.% | 5.5 | 0.8 | ≃3 |
| Desulfurization, % | 35 | 52 | 54 |
| V removal, % | 72 | 91 | 79 |
| Ni removal, % | 70 | 83 | 82 |
| Con. Carbon conv., % | 47 | 54 | 54 |

*Molybdenum concentration in oil recovered by magnetic filtration was <1 ppm.

It should be noted that run 6R-34 is a comparative run with no catalyst and run 21-R-08 is a comparative run with stainless steel alone. Run 21-R-05 (catalyst of Example 10, molybdenum sulfide-carbon-hydrogen on stainless steel) is a run utilizing the catalyst of the present invention. It should be noted that molybdenum sulfide-carbon-hydrogen deposited on stainless steel as catalyst was better than the run utilizing the stainless steel alone as catalyst, particularly for suppressing the formation of coke.

Example 11

The conversion advantage obtained using molybdenum sulfide-carbon-hydrogen surface coated 410 stainless steel (Example 10) as catalyst in the hydrocracking of light Arabian vacuum gas oil, relative to 410 stainless steel alone are shown in Table V.

### TABLE V
#### Vacuum gas oil hydrocracking runs
Reactor Charge @ room temp: 92 g. vacuum gas oil
∿50 g. catalyst
∿1.15 mole $H_2$
∿0.06 mole $H_2S$

Reaction Conditions: 30 min. @ 385°C followed by 30 min. @ 449°C

| Run No. | 56-R-05 | 34-R-71 |
|---|---|---|
| Catalyst | −325 mesh* 410 SS[1] | MoS2-on-410 SS[1] (−325 mesh)* |
| $C_1$—$C_4$ yield, wt.% on feed | 2.0 | 2.6 |
| 650+°F (343°C) Conversion, % | 39 | 38 |
| Distillate/Naphtha wt. ratio | 3.0 | 3.7 |
| Desulfurization, wt.% | 67 | 79 |
| Bromine Number | 12.5 | 9.4 |

[1] 410 SS means 410 Stainless Steel; *−325 Tyler Mesh=0.043 mm max.

It should be noted that improved desulfurization and product Bromine Number (measure of unsaturation) were obtained using the molybdenum sulfide-carbon-hydrogen coated alloy. In addition, the coated alloy catalyst provided a higher ratio of distillate to naphtha products than that obtained with the 410 stainless steel alloy alone. This is a desirable selectivity characteristic for most vacuum gas oil hydrocracking uses.

Example 12

A catalyst comprising a molybdenum sulfide-carbon-hydrogen composition coated on a −325 mesh (Tyler) (−0.043 mm), water-atomized ferroaluminum alloy powder was prepared as follows: a mixture comprising 3.68 grams of molybdenum naphthenate, 99.8 grams of light Arab vacuum gas oil and 50 grams of alloy powder which assigned 90.5 weight percent Fe; 9.1 weight percent Cl and 0.4 weight percent oxygen was charged to a 300 cc autoclave, which was pressured with 20 psig (137.9 kPa gauge) hydrogen sulfide and 2000 psig (13790 kPa gauge) hydrogen at room temperature and then heated with stirring for a period of two hours at 399°C (750°F). The autoclave was cooled below 93.33°C (200°F) and vented while further cooling to room temperature. The autoclave contents were filtered and the recovered solids were washed with hot toluene followed by hot n-heptane. After vacuum oven drying for one hour at 90°C, 52.08 grams of catalyst were recovered. The recovered catalyst is a catalyst of the present invention.

The resistance of the catalyst of Example 12 to sulfiding corrosion was determined by subjecting the catalyst to four consecutive high severity cycles of vacuum gas oil hydrocracking. After the fourth cycle, fifty-two point twenty-eight (52.28 g) grams of dry catalyst were recovered, which amount is only 0.2 g greater in weight than the weight of the catalyst charged to the first hydrocracking cycle. The apparent rate of weight increase (percent increase in weight divided by hours of contact) was 0.16% per hour.

A summary of the hydrocracking results obtained in each cycle is given in Table VI.

TABLE VI

| Cycle No. | 1 | 2 | 3 | 4 |
|---|---|---|---|---|
| Contact Time, Minutes | 30 | 40 | 40 | 40 |
| Desulfurization of feed, % | 76 | 78 | 77 | 75 |
| 650+°F (343°C), conversion, % | 40 | 47 | 45 | 47 |
| Bromine No. of product | 4.9 | 3.8 | 4.0 | 4.3 |
| Distillate (325—650°F) (163—343°C) to naphtha (65—325°F) (18—163°C) wt. ratio | 3.9 | 4.0 | 4.5· | 4.5 |

As can be seen from Table VI the catalyst activity is being maintained during repeated use.

**Claims**

1. A process for the preparation of a supported catalyst composition comprising the steps of:
   (a) adding to a hydrocarbon oil having a Conradson carbon content of up to 50 weight percent particles of a support of elemental iron;
   (b) adding to the hydrocarbon oil an oil-soluble thermally-decomposable metal compound of which the metal constituent is selected from the metals of Groups V, VIB, VIIB and VIII (other than iron) of the Periodic Table of Elements or mixtures of said metals; and
   (c) heating the chargestock in the presence of a reducing gas to decompose the thermally-decomposable metal compound, characterized by the following combination of features;
   (d) the support is selected from solid particles of at least one metal or alloy of metals selected from Groups IB, II, III, IV, VB, VIB, VIIB and VIII;
   (e) the particles constituting the support have a surface area of less than 5 m²/g;
   (f) the metal constituent of the thermally-decomposable metal compound is selected from the metals of Groups II, III, IV, V, VIB, VIIB and VIII of the Periodic Table;
   (g) the said heating of the chargestock is effected in the presence of a gas containing hydrogen and/or hydrogen sulfide;
   (h) the amount of thermally decomposable metal compound added to the hydrocarbon oil provides a ratio of atoms of Conradson carbon to atoms of metal constituent of no more than 600 to 1; and
   (i) after the heating step, a supported catalyst composition comprising a catalyst composition deposited on the support is recovered, the catalyst composition comprising said metal constituent, carbon and hydrogen, said composition having a surface area of at least 50 m²/g and the support for the composition having a surface area of less than 5 m²/g.

2. The process of claim 1 wherein said support comprises at least one metal selected from the group

11

consisting of iron, cobalt, nickel, chromium, molybdenum, tungsten, vanadium, zinc, tantalum, aluminium, copper and zirconium.

3. The process of claim 1 or claim 2 wherein said support is an aluminium alloy powder prepared by atomizing an aluminium alloy, in molten state, into a stream selected from the group consisting of water, a gas and mixtures thereof.

4. The process of any one of claims 1 to 3 wherein said support comprises iron.

5. The process of any one of claims 1 to 4 wherein said metal constituent of said thermally decomposable compound is selected from the group consisting of vanadium, tungsten, molybdenum, nickel, cobalt, iron and mixtures thereof.

6. The process of any one of claims 1 to 5 wherein said metal component of said composition, calculated as elemental metal, comprises from 0.01 to 10 weight percent based on the total weight of the supported catalyst.

7. A hydrocarbon treating process which comprises contacting a hydrocarbonaceous oil feed at treating conditions with a supported catalyst composition made by a process in accordance with any one of claims 1 to 6.

8. A coal liquefaction process which comprises contacting coal at coal liquefaction conditions with a supported catalyst composition made by a process in accordance with any one of claims 1 to 6.

9. The process of claim 7 or claim 8 wherein said process is conducted in the presence of added hydrogen.

**Patentansprüche**

1. Verfahren zur Herstellung einer Trägerkatalysatorzusammensetzung, bei dem

(a) einem Kohlenwasserstofföl mit einem Conradson-Kohlenstoffgehalt von bis zu 50 Gew.% Trägerteilchen aus elementarem Eisen zugesetzt werden,

(b) dem Kohlenwasserstofföl eine öllösliche thermisch zersetzbare Metallverbindung zugesetzt wird, bei der der Metallbestandteil ausgewählt ist aus den Metallen der Gruppen V, VIB, VIIB und VIII (andere Metalle als Eisen) des Periodischen Systems der Elemente oder Mischungen dieser Metalle, und

(c) das Einsatzmaterial in Gegenwart eines reduzierenden Gases erhitzt wird, um die thermisch zersetzbare Metallverbindung zu zersetzen, dadurch gekennzeichnet, daß

(d) der Träger ausgewählt ist aus festen Teilchen von mindestens einem Metall oder einer Legierung von Metallen ausgewählt aus den Gruppen IB, II, III, IV, VB, VIB, VIIB und VIII,

(e) die den Träger bildenden Teilchen eine Oberfläche von weniger als 5 $m^2/g$ besitzen,

(f) der Metallbestandteil der thermisch zersetzbaren Metallverbindung ausgewählt ist aus den Metallen der Gruppen II, III, IV, V, VIB, VIIB und VIII des Periodischen Systems,

(g) das Erhitzen des Einsatzmaterials in Gegenwart eines Wasserstoff und/oder Schwefelwasserstoff enthaltenden Gases erfolgt,

(h) die dem Kohlenwasserstofföl zugesetzte Menge an thermisch zersetzbarer Metallverbindung ein Verhältnis von Atomen von Conradson-Kohlenstoff zu Atomen des Metallbestandteils von nicht mehr als 600:1 liefert und

(i) nach der Erhitzungsstufe eine Trägerkatalysatorzusammensetzung, die eine Katalysatorzusammensetzung niedergeschlagen auf dem Träger umfaßt, gewonnen wird, wobei die Katalysatorzusammensetzung den Metallbestandteil, Kohlenstoff und Wasserstoff umfaßt und eine Oberfläche von mindestens 50 $m^2/g$ besitzt und der Träger für die Zusammensetzung eine Oberfläche von weniger als 5 $m^2/g$ besitzt.

2. Verfahren nach Anspruch 1, dadurch gekennzeichnet, daß der Träger mindestens ein Metall ausgewählt aus der Gruppe bestehend aus Eisen, Kobalt, Nickel, Chrom, Molybdän, Wolfram, Vanadin, Zink, Tantal, Aluminium, Kupfer und Zirkonium umfaßt.

3. Verfahren nach Anspruch 1 oder 2, dadurch gekennzeichnet, daß der Träger ein Aluminiumlegierungspulver ist, das durch Atomisieren einer Aluminiumlegierung im geschmolzenen Zustand in einem Strom ausgewählt aus der Gruppe bestehend aus Wasser, einem Gas und Mischungen derselben hergestellt worden ist.

4. Verfahren nach einem der Ansprüche 1 bis 3, dadurch gekennzeichnet, daß der Träger Eisen umfaßt.

5. Verfahren nach einem der Ansprüche 1 bis 4, dadurch gekennzeichnet, daß der Metallbestandteil der thermisch zersetzbaren Verbindung ausgewählt ist aus der Gruppe bestehend aus Vanadin, Wolfram, Molybdän, Nickel, Kobalt, Eisen und Mischungen derselben.

6. Verfahren nach einem der Ansprüche 1 bis 5, dadurch gekennzeichnet, daß die Metallkomponente der Zusammensetzung, berechnet als elementares Metall, 0,01 bis 10 Gew.% bezogen auf das Gesamtgewicht des Trägerkatalysators ausmacht.

7. Kohlenwasserstoffbehandlungsverfahren, gekennzeichnet durch das Kontaktieren eines kohlenwasserstoffhaltigen Öleinsatzmaterials bei Behandlungsbedingungen mit einer Trägerkatalysatorzusammensetzung hergestellt nach einem Verfahren gemäß einem der Ansprüche 1 bis 6.

8. Kohleverflüssigungsverfahren, gekennzeichnet durch das Kontaktieren von Kohle bei Kohleverflüssigungsbedingungen mit einer Trägerkatalysatorzusammensetzung hergestellt nach einem Verfahren gemäß einem der Ansprüche 1 bis 6.

**0 055 311**

9. Verfahren nach Anspruch 7 oder 8, dadurch gekennzeichnet, daß das Verfahren in Gegenwart von zugesetztem Wasserstoff durchgeführt wird.

**Revendications**

1. Procédé de préparation d'une composition de catalyseur supporté comprenant les étapes suivantes:

(a) addition, à une huile hydrocarbonée ayant une teneur en carbone Conradson allant jusqu'à 50% en poids, de particules d'un support de fer élémentaire;

(b) addition, à l'huile hydrocarbonée, d'un composé métallique décomposable par la chaleur et soluble dans l'huile dont le constituant métal est choisi parmi les métaux des Groupes V, VIB, VIIB et VIII (autre que le fer) de la Classification Périodique des Eléments ou de mélanges de ces métaux; et

(c) chauffage de la charge en présence d'un gaz réducteur pour décomposer le composé métallique décomposable par la chaleur, caractérisé par la combinaison suivante:

(d) le support est choisi parmi des particules solides d'au moins un métal ou un alliage de métaux choisi dans les Groupes IB, II, III, IV, VB, VIB, VIIB and VIII,

(e) les particules constituant le support ont une surface spécifique inférieure à 5 $m^2/g$,

(f) le constituant métal du composé métallique décomposable par la chaleur est choisi parmi les métaux des Groupes II, III, IV, V, VIB, VIIB et VIII de la Classification Périodique,

(g) le chauffage de la charge est effectué en présence d'un gaz contenant de l'hydrogène et/ou de l'hydrogène sulfuré,

(h) la quantité de composés métalliques décomposables par la chaleur ajoutée à l'huile hydrocarbonée assure un rapport nombre d'atomes de carbone Conradson/nombre d'atomes de constituant métal ne dépassant pas 600/1; et

(i) après l'étape de chauffage, en sépare une composition de catalyseur supportée comprenant une composition de catalyseur déposée sur le support, la composition de catalyseur comprenant ledit constituant métal, du carbone et de l'hydrogène, cette composition ayant une surface spécifique d'au moins 50 $m^2/g$ et le support pour la composition ayant une surface spécifique de moins de 5 $m^2/g$.

2. Procédé selon la revendication 1, dans lequel le support comprend au moins un métal choisi parmi le fer, le cobalt, le nickel, le chrome, le molybdène, le tungstène, le vanadium, le zinc, la tantale, l'aluminium, le cuivre et le zirconium.

3. Procédé selon la revendication 1 ou 2, dans lequel le support est une poudre d'alliage d'aluminium préparée par "atomisation" d'un alliage d'aluminium, à l'état fondu, avec un courant choisi parmi de l'eau, un gaz et un des mélanges de ceux-ci.

4. Procédé selon l'une quelconque des revendications 1 à 3 dans lequel le support comprend du fer.

5. Procédé selon l'une quelconque des revendications 1 à 4, caractérisé en ce que le constituant métal du composé métallique décomposable par la chaleur est choisi parmi le vanadium, le tungstène, le molybdène, le nickel, le cobalt, le fer et les mélanges de ceux-ci.

6. Procédé selon l'une quelconque des revendications 1 à 5, dans lequel le constituant métal de ladite composition, calculé en métal élémentaire, constitue 0,01 à 10% du poids total du catalyseur supporté.

7. Procédé de traitement d'hydrocarbure qui comprend la mise en contact d'une alimentation d'huile hydrocarbonée, dans des conditions de traitement, avec une composition de catalyseur supporté préparée par un procédé

8. Procédé de liquéfaction de charbon qui comprend la mise en contact de charbon, dans des conditions de liquéfaction du charbon, avec une composition de catalyseur supporté préparée par un procédé selon l'une quelconque des revendications 1 à 6.

9. Procédé selon la revendication 7 ou 8, caractérisé en ce qu'il est réalisé en présence d'hydrogène ajouté.